# EUROPEAN PATENT APPLICATION

(11) **EP 2 431 621 A1**
(43) Date of publication of application: **21.03.2012**
(21) Application number: 11181761.5
(22) Date of filing: 19.09.2011
(51) Int. Cl.: F16C 1/26

(54) **Quick-fit anchoring device for anchoring a sheath of a control cable to a mounting bracket**

(30) Priority: 20.09.2010 IT TO20100767
(71) Applicant: Sila Holding Industriale S.p.A., 10042 Nichelino(Torino) (IT)
(72) Inventor: Quaglia, Marco, 10060 Angrogna (IT); Tancredi, Angelo, 10137 Torino (IT)
(74) Representative: Rondano, Davide

(57) **Abstract**

A quick-fit anchoring device (12) for anchoring a sheath of a control cable to a mounting bracket (10) is disclosed, which has a slot (14) shaped generally as a U opening to a side (16) of the mounting bracket (12), wherein the slot (14) comprises a receiving portion (18) of circular shape which is closed along an arc of circumference extending more than 180 degrees and less than 360 degrees so as to define an opening (20) the width of which is smaller than the diameter of the receiving portion (18). The device (12) comprises a hollow body (24) adapted to be fixed to the sheath, a collar (26) mounted on the body (24) coaxially therewith and rotatably relative thereto about an axis of rotation (X) coinciding with its own axis, and a spring (28) interposed between the body (24) and the collar (26). The collar (26) forms a pair of axial projections (60) shaped so as to be insertable into the slot (14) by translation along a direction of insertion (Z) laying in the plane of the mounting bracket (10), when the collar (26) is in a first angular position, and to be locked in the slot (14) in this direction of insertion (Z), when the collar (26) is in a second angular position rotated relative to the first one. The spring (28) is arranged to apply on the collar (26) a torque tending to rotate this latter from the first to the second angular position. The body (24) is provided with a ratchet (42) cooperating with a locking seat (70) of the collar (26) to keep the collar (26) locked in the first angular position, when the anchoring device (12) is not mounted on the mounting bracket (10), and to unlock the collar (26), when the anchoring device (12) is inserted into the slot (14), so as to cause the collar (26) to rotate automatically from the first to the second position as a result of the torque applied by the spring (28).

## Description

The present invention refers to a quick-fit anchoring device for anchoring a sheath of a control cable to a mounting bracket, particularly for use on a motor vehicle.

Document WO2004/036068 discloses a quick-fit anchoring device for anchoring a sheath of a control cable to a stationary mounting bracket having a slot opening towards an edge of the same mounting bracket, wherein the anchoring device comprises a hollow body which is fixed to the sheath coaxially thereto and has a circumferential groove having an axial size larger than the thickness of the mounting bracket and an outer diameter smaller than the inner diameter of the slot, whereby the body can be inserted into the slot in the region of the groove. The anchoring device further comprises a collar which is mounted around the body so as to be axially slidable along it and which forms, on the side facing towards the groove, a leading edge the cross-section of which has a wedge-like profile. When the anchoring device is mounted in the slot, the leading edge of the collar extends in the groove so as to increase the diameter thereof and thus prevent the anchoring device from disengaging from the same slot. A spring applies on the collar a biasing force tending to urge the collar towards the groove and hence, in the mounted condition of the anchoring device on the mounting bracket, to keep the anchoring device in this condition. In order to remove the anchoring device from the mounting bracket it is sufficient to move the collar axially away from the mounting bracket, against the biasing force of the spring.

A drawback of this known anchoring device is that mounting of the device on the mounting bracket requires moving the collar against the biasing force of the spring in order to make the groove free and thus allow the body to be inserted into the slot in the region of the same groove. Since the biasing force of the spring is usually rather high, as it must prevent the anchoring device from inadvertently disengaging from the slot once the anchoring device is mounted on the mounting bracket, the mounting force to be applied on the mounting bracket by the operator which is assigned for the mounting of the anchoring device is correspondingly high. On the other hand, reducing the biasing force of the spring in order to reduce the force required to mount the anchoring device on the mounting bracket involves increasing the risk of inadvertent disengagement of the anchoring device from the mounting bracket.

It is therefore an object of the present invention to provide a quick-fit anchoring device for anchoring a sheath of a control cable to a mounting bracket which is not affected by the drawback of the prior art discussed above, and hence which is able to ensure adequate resistance against removal and which requires at the same time a minimum force for mounting on the mounting bracket.

This and other objects are fully achieved according to the present invention by virtue of a quick-fit anchoring device for anchoring a sheath of a control cable to a mounting bracket having the features set forth in the enclosed independent claim 1, the preamble of which is based on document GB2349668.

Preferred embodiments of a quick-fit anchoring device for anchoring a sheath of a control cable to a mounting bracket according to the present invention are the subject-matter of the dependent claims, the content of which is to be regarded as an integral and integrating part of the present disclosure.

In short, the invention is based on the idea of providing a quick-fit anchoring device for anchoring a sheath of a control cable to a mounting bracket comprising a hollow body adapted to be fixed to the sheath of the control cable coaxially thereto, a collar mounted on the body coaxially to the same and movable relative to the same, and resilient means interposed between the body and the collar,
wherein the collar is rotatably mounted on the body about an axis of rotation coinciding with its own axis,
wherein the collar forms at least one pair of axial projections which project axially from a front face of the collar, are arranged on opposite sides of a plane passing through the axis of the collar and are shaped so as to be insertable into the slot of the mounting bracket by translation along a direction of insertion laying in the plane of the mounting bracket, when the collar is in a given first angular position, and to remain locked in the slot of the mounting bracket along said direction of insertion, when the collar is in a given second angular position rotated relative to the first one about said axis of rotation,
wherein said resilient means are arranged to apply on the collar a torque tending to cause this latter to rotate from the first to the second angular position, and
wherein the anchoring device is further provided with locking means arranged to keep the collar locked in the first angular position, when the anchoring device is not mounted on the mounting bracket, and to unlock the collar, when the anchoring device is inserted into the slot of the mounting bracket, so as to cause the collar to rotate automatically from the first to the second position as a result of the torque applied by said resilient means.

Preferably, the locking means are made as resiliently deformable means and the collar is unlocked by resilient deformation of said locking means. In order to unlock the collar, and hence allow the anchoring device to be mounted on the mounting bracket, the operator must therefore overcome only the force opposed by the locking means - made as resiliently deformable means - against their resilient deformation, and not the biasing force applied by the resilient means on the collar in the known anchoring device previously discussed. The designer can therefore design the resilient means in such a manner that they apply on the collar a biasing torque of the desired value, without having to worry that this might make the mounting of the anchoring device by the operator more difficult.

Preferably, the locking means are formed by a resiliently deformable ratchet formed by the body of the anchoring device, the ratchet being configured to engage, in the condition in which the anchoring device is ready to be mounted on the mounting bracket, in a corresponding locking seat provided in the collar, so as to keep the collar locked in the first angular position, and to disengage from the corresponding locking seat in the collar, thereby causing the collar to rotate from the first to the second angular position as a result of the biasing torque applied by the resilient means, when the anchoring device is inserted into the slot of the mounting bracket. To this end, the resiliently deformable ratchet is advantageously shaped so as to abut against an edge of the slot of the mounting bracket when the anchoring device is inserted into the same slot, and to be resiliently deformed as a result of the interaction with this edge until it disengages from the corresponding locking seat in the collar.

The anchoring device according to the invention can be anchored to the mounting brackets which are commonly used now, in particular on board of motor vehicles, for anchoring the sheaths of control cables, such as for instance of "push-pull" cables intended to transmit commands from one or more electro-mechanical actuators to the gearbox. These mounting brackets have a slot shaped generally as a U opening towards an upper horizontal side of the mounting bracket, which slot comprises a receiving portion of circular shape which is closed along an arc of circumference extending more than 180 degrees and less than 360 degrees so as to define an opening the width of which is smaller than the diameter of the receiving portion, and a lead-in portion formed by a pair of inclined sides which start from the upper horizontal side of the mounting bracket and converge towards the opening of the receiving portion. In order to allow the anchoring device to be mounted on a mounting bracket having a slot of that shape, the aforesaid at least one pair of axial projections of the collar advantageously comprises a pair of projections with a crescent-like shape, which are arranged symmetrically on opposite sides of a plane passing through the axis of the collar and have an outer diameter substantially equal (apart from a minimum play) to that of the receiving portion of the slot, the projections extending over an angle such that when the collar is in the first angular position the overall size of the projections in a direction perpendicular to the direction of insertion into the slot (in the present case, the horizontal direction) is smaller than the width of the opening of the receiving portion of the slot, thereby allowing the anchoring device to be inserted into or removed from the slot, whereas when the collar is in the second angular position the overall size of the projections in the aforesaid direction is larger than the width of the opening of the receiving portion of the slot, thereby preventing the anchoring device from being removed from the slot.

Preferably, the first and second angular positions of the collar are rotated 90 degrees relative to each other, in which case when the collar is in the second angular position the overall size of the axial projections of the same collar in a direction perpendicular to the direction of insertion into the slot is equal to the outer diameter of the same projections.

Preferably, the collar forms on its outer cylindrical surface a radial projection having the function of indicating clearly and unambiguously to the operator whether the collar is in the first or in the second angular position. This radial projection is in fact drivingly connected for rotation with the collar and therefore it will also take first and second angular positions corresponding to the first and second angular positions of the collar, respectively. The operator can thus immediately realize whether the anchoring device is not correctly mounted on the mounting bracket. Furthermore, the body of the anchoring device is advantageously provided in this case with rotation preventing means for preventing the body from rotating relative to the sheath.

Further features and advantages of the present invention will appear from the following detailed description, given purely by way of non-limiting example with reference to the appended drawings, in which:
Figure 1 is a perspective view, partially in phantom, of a quick-fit anchoring device for anchoring a sheath of a control cable to a mounting bracket according to a preferred embodiment of the present invention, in the mounted condition of the anchoring device on the mounting bracket;
Figure 2 is a perspective view showing only the anchoring device of Figure 1, without the mounting bracket, the device being rotated 90 degrees relative to the position shown in Figure 1;
Figure 3 is an exploded perspective view showing only the anchoring device of Figure 1, without the mounting bracket;
Figures 4 and 5 are front elevation views showing the collar of the anchoring device of Figure 1 and the associated mounting bracket, in the first angular position and in the second angular position of the collar, respectively;
Figure 6 is a further perspective view showing from below the anchoring device of Figure 1 in the mounted condition on the mounting bracket;
Figure 7 is a view from below on an enlarged scale showing in detail the resiliently deformable ratchet of the anchoring device of Figure 1, in the first angular position of the collar; and
Figures 8 and 9 are axial section views of the anchoring device of Figure 1, in the ready-to-mount condition and in the mounted condition on the mounting bracket, respectively.

In the following description and claims, the terms "axial" and "longitudinal" are used to indicate the direction of the axis of the anchoring device, coinciding with the direction of the axis of the sheath, whereas the terms "radial" and "transverse" are used to indicate any direction passing through that axis and perpendicular thereto. Moreover, terms such as "upper" and "lower" or "vertical" and "horizontal" are used in the following description and claims with reference to the mounted condition of the anchoring device on a mounting bracket oriented vertically and having the open slot facing upwards. It is however clear that the anchoring device according to the invention can be mounted on mounting brackets having any orientation.

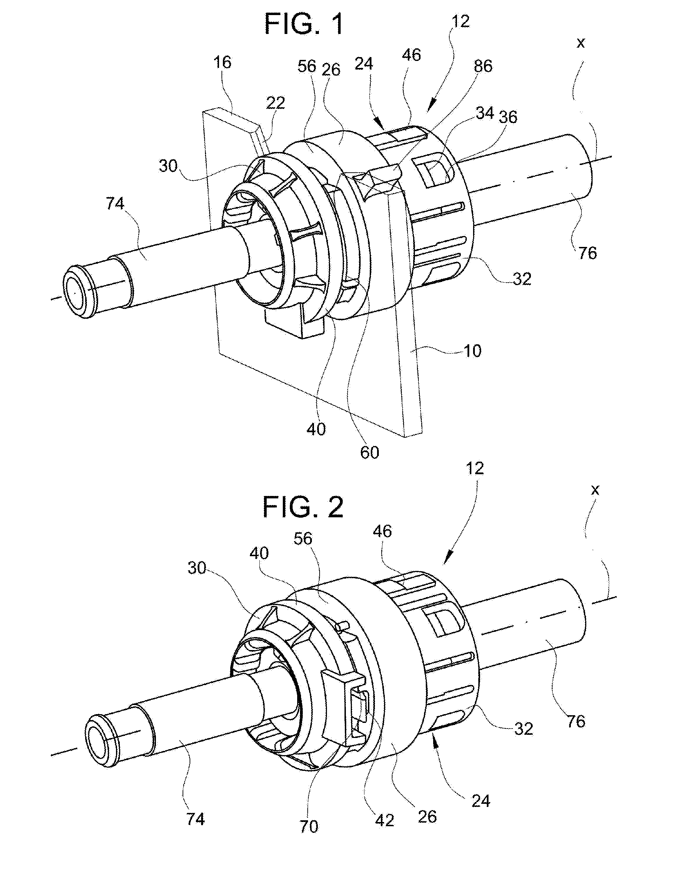

With reference first to Figure 1, numeral 10 indicates a mounting bracket fixed for instance to a stationary part of a motor vehicle, whereas numeral 12 generally indicates an anchoring device according to the invention, which is intended to releasably anchor a sheath (not shown) of a control cable, in particular of a so-called "push-pull" cable, to the mounting bracket 10 (hereinafter simply referred to as bracket, for the sake of brevity).

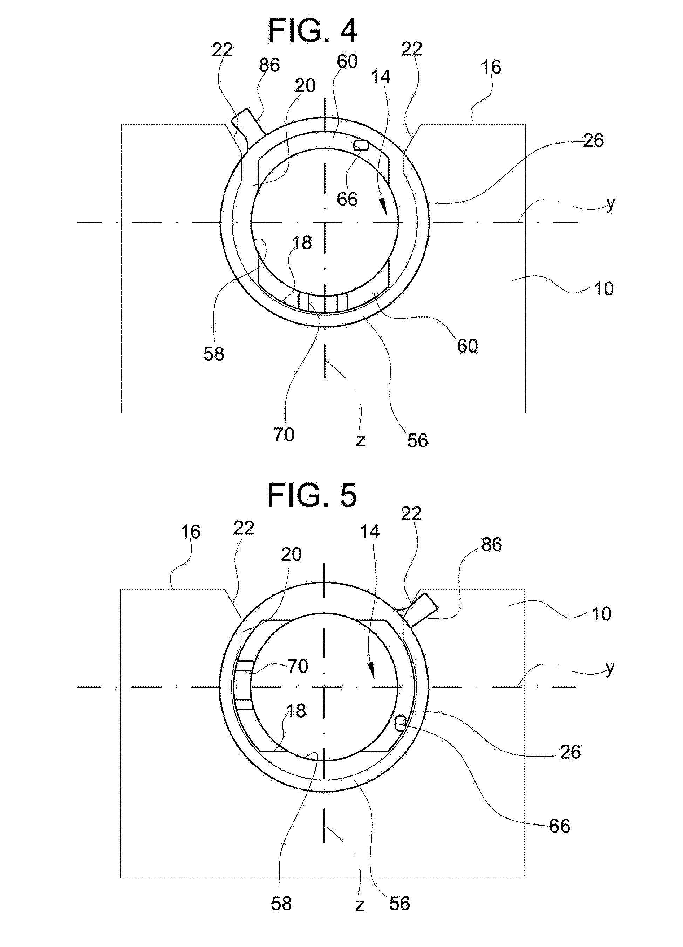

In order to receive and restrain the anchoring device 12, the bracket 10 has, in per-se-known manner, a slot 14 having generally the shape of a U opening towards an upper horizontal side 16 of the bracket 10. The slot 14 comprises a receiving portion 18 of circular shape, which is closed along an arc of circumference extending more than 180 degrees and less than 360 degrees so as to define an opening 20 having a width smaller than the diameter of the receiving portion 18, and a lead-in portion formed by a pair of inclined sides 22 which start from the upper horizontal side 16 of the bracket 10 and converge towards the opening 20 of the receiving portion 18. As can be seen more clearly in Figures 4 and 5, the slot 14 has a symmetrical configuration with respect to a vertical direction Z which coincides with the direction along which the anchoring device 12 is inserted into or removed from the slot 14 and which therefore will be hereinafter referred to as direction of insertion.

The anchoring device 12 basically comprises a hollow body 24 (hereinafter referred to simply as body, for the sake of brevity) adapted to be fixed to the sheath of the control cable coaxially to the same, a collar 26 mounted on the body 24 coaxially to the same and rotatable relative to the same, and a spring 28 interposed between the body 24 and the collar 26. The axis of the body 24 and of the collar 26, which - as already stated - coincides also with the axis of the sheath of the control cable, is indicated X in the drawings.

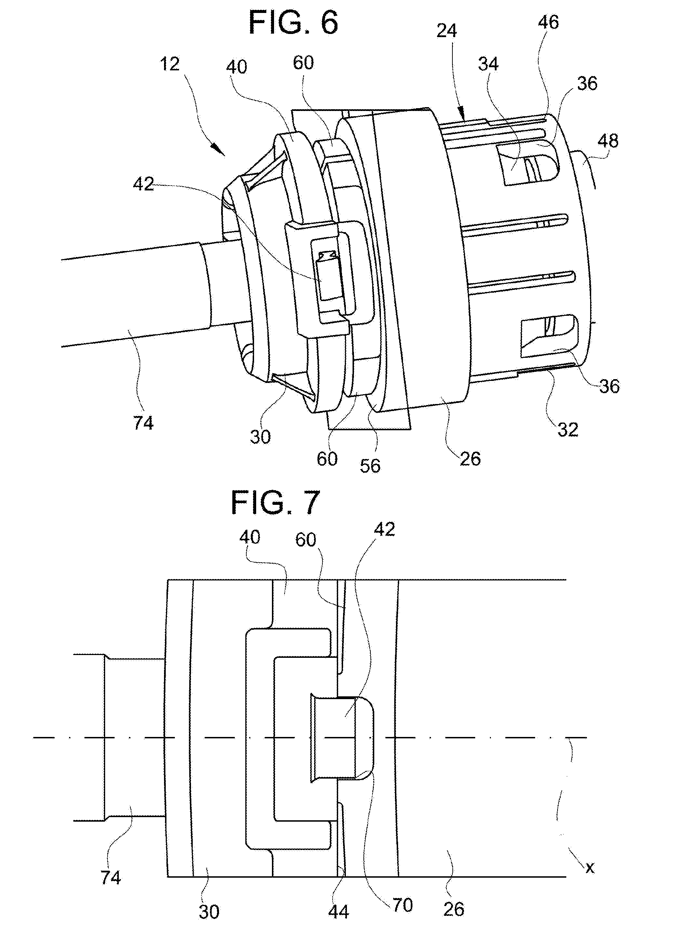

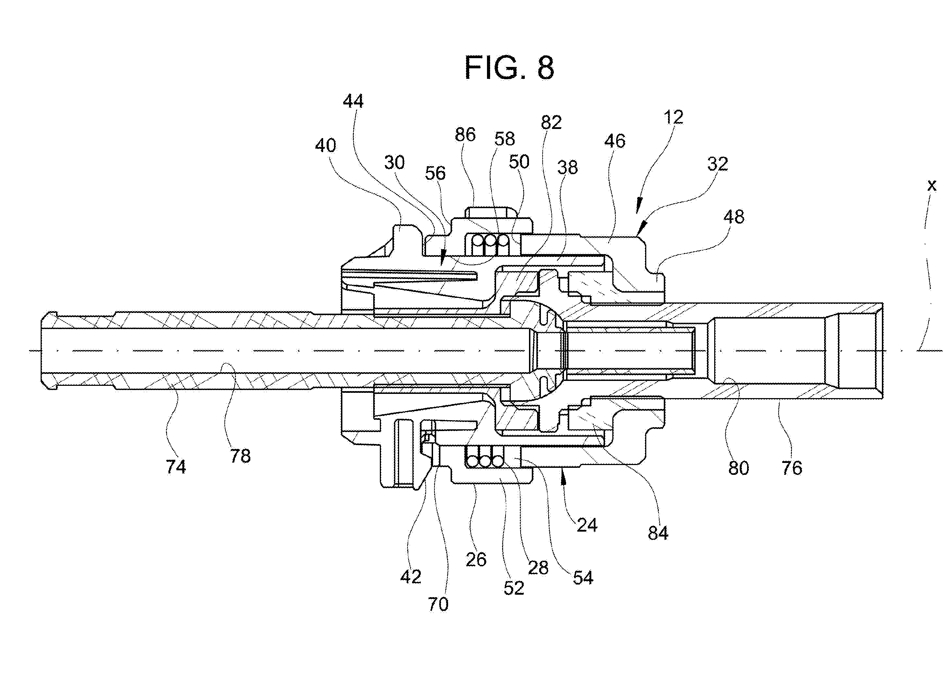

More specifically, the body 24 comprises first and second elements 30 and 32 made as hollow elements separate from each other and connected to each other for instance by engagement of a plurality of connection teeth 34 formed by the first element 30 in a corresponding plurality of seats 36 provided in the second element 32. The first element 30 comprises a cylindrical tubular portion 38 and a shoulder 40 extending radially outwards from the cylindrical tubular portion 38 near an end of this latter. As shown more clearly in Figures 6 to 8, the shoulder 40 of the first element 30 is interrupted over a short segment of its circumferential development and forms in this segment a resiliently deformable ratchet 42 which in the undeformed condition projects axially towards the second element 32 from the plane of a front face 44 of the shoulder 40 facing towards the second element 32. The second element 32 comprises a first cylindrical tubular portion 46 mounted on the cylindrical tubular portion 38 of the first element 30 and a second cylindrical tubular portion 48 which has a smaller diameter than that of the first one and extends on the axially opposite side to the first element 30. The front face 44 of the shoulder 40 of the first element 30 is axially spaced from a front face 50 of the first cylindrical tubular portion 46 of the second element 32, the collar 26 and the spring 28 being arranged between said front faces 44 and 50, as will be explained in detail further on.

The collar 26 comprises a cylindrical tubular portion 52 which is arranged around the cylindrical tubular portion 38 of the first element 30 and defines with this latter an annular chamber 54 in which the spring 28 is received. The collar 26 further comprises a transverse wall 56 which extends radially inwards from the end of the cylindrical tubular portion 52 facing towards the shoulder 40 of the first element 30 and has a cylindrical hole 58 into which the cylindrical tubular portion 38 of the first element 30 is inserted. The collar 26 further comprises a pair of axial projections 60 projecting axially towards the shoulder 40 of the first element 30 from the face of the transverse wall 56 facing towards the shoulder 40. The axial projections 60 have a crescent-like shape and are symmetrically disposed on opposite sides of a plane passing through the axis of the collar 26 (axis X). The axial projections 60 have an inner diameter substantially equal to the diameter of the cylindrical hole 58 and an outer diameter substantially equal to that of the receiving portion 18 of the slot 14, wherein only a minimum play is provided between the outer diameter of the axial projections 60 and the diameter of the receiving portion 18 so as to allow the axial projections 60 to rotate along with the collar 26 when they are placed inside the receiving portion 18. The angular extension of the axial projections 60 is such that when the collar 26 is in a first angular position (shown in Figure 4) the overall size of these projections in a direction Y perpendicular to the direction of insertion Z is smaller than the width of the opening 20 of the receiving portion 18 of the slot 14, whereby the collar 26, and the whole anchoring device 12 along with it, can be inserted into, or removed from, the slot 14, whereas when the collar 26 is in a second angular position (shown in Figure 5) the overall size of these projections in the aforesaid direction Y is larger than the width of the opening 20, thereby preventing the collar 26, and the whole anchoring device 12 along with it, from being removed from the slot 14. The first angular position of the collar 26 is preferably defined in such a manner that, with the collar 26 in this position, the axial projections 60 are aligned with each other in the direction of insertion Z. The second angular position of the collar 26 is preferably rotated 90 degrees relative to the first one, whereby when the collar 26 is in the second angular position the axial projections are aligned with each other in the direction Y and therefore their overall size in this direction is substantially equal to their outer diameter, and hence substantially equal to the diameter of the receiving portion 18 of the slot 14.

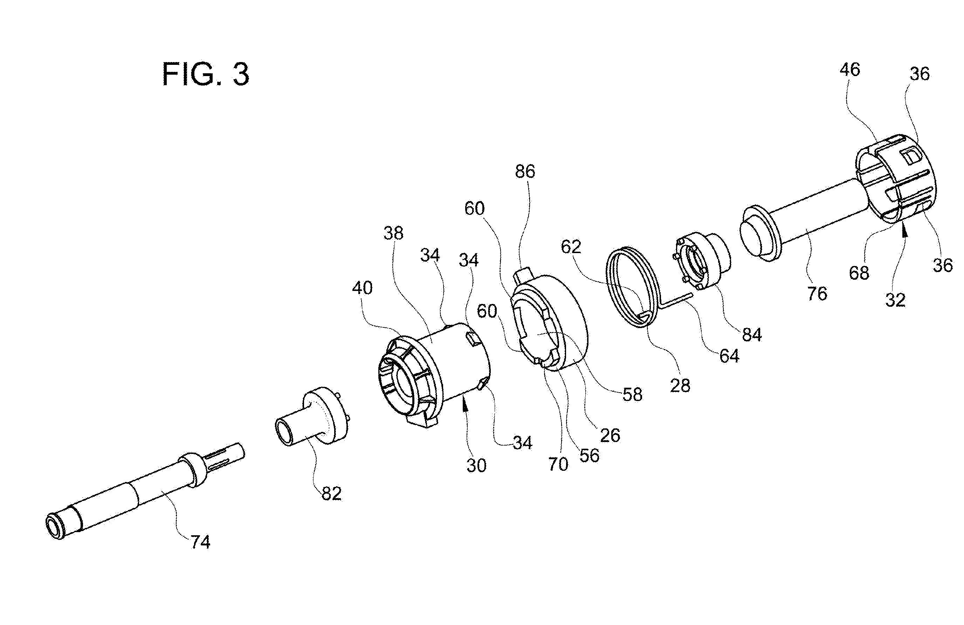

The spring 28, which - as already stated above - is received in the annular chamber 54, is preloaded so as to apply on the collar 26 a torque tending to rotate this latter from the first to the second angular position. In the illustrated example, the spring 28 is made as a cylindrical helical spring having a first end 62 facing towards the shoulder 40 of the first element 30 of the body 24 and a second end 64 facing towards the second element 32 of the body 24. The two ends 62 and 64 of the spring 28 extend both parallel to the axis of the spring (axis X) and are inserted into a hole 66 of the collar 26 (Figures 4 and 5) and into a hole 68 of the second element 32 of the body 24 (Figure 3), respectively.

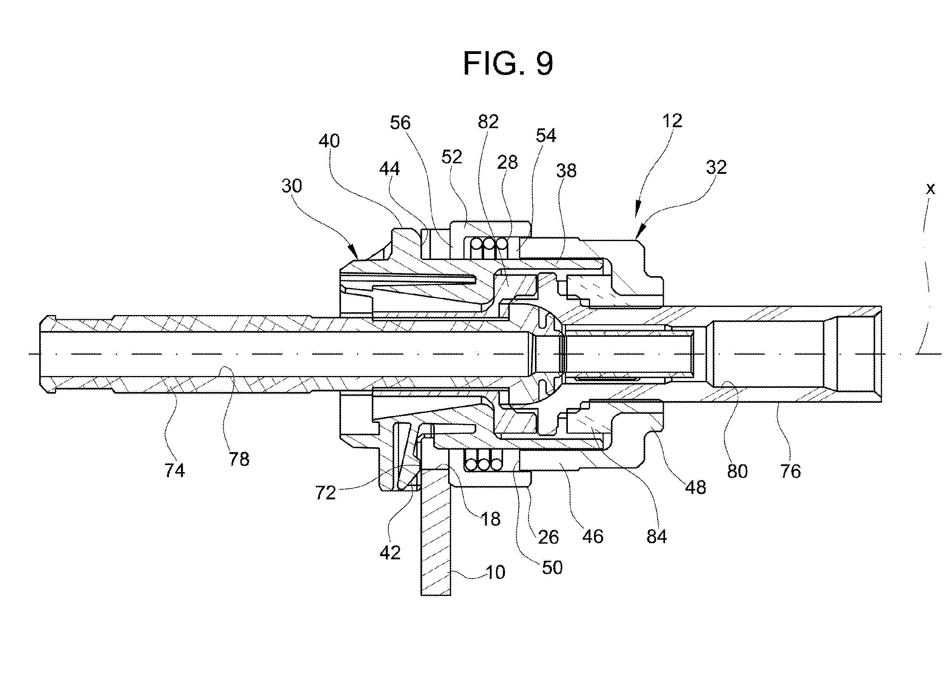

As shown in Figure 7, in the condition in which the anchoring device 12 is ready to be mounted on the bracket 10, the collar 26 is kept locked in the first angular position as a result of the ratchet 42 formed by the first element 30 of the body 24 engaging in a corresponding locking seat 70 of the collar 26. As shown in Figures 4 and 5, the locking seat 70 is made in particular on the front face of one of the two axial projections 60 of the collar 26, advantageously in the centre of this axial projection. As already stated above, the ratchet 42 projects axially towards the second element 32, i.e. towards the collar 26, with respect to the plane of the front face 44 of the shoulder 40, and is therefore able to engage in the locking seat 70 of the collar 26. The disengagement of the ratchet 42 from the locking seat 70, which automatically results in the rotation of the collar 26 from the first to the second angular position due to the torque applied on it by the spring 28, occurs by virtue of the ratchet 42 cooperating with an edge 72 (Figure 9) formed by the receiving portion 18 of the slot 14 of the bracket 10, when the anchoring device 12 is inserted into the same slot. To this end, the collar 26 and the first element 30 of the body 24 are dimensioned in such a manner that the distance between the front face 44 of the shoulder 40 of the first element 30 and the front face of the transverse wall 56 of the collar 26 facing towards the first element 30 is substantially equal (apart from a minimum play, if any) to the thickness of the bracket 10. When the anchoring device 12 is inserted into the slot 14 of the bracket 10, the edge 72 of the bracket 10 thus cooperates with the ratchet 42 and resiliently deforms it until it disengages from the locking seat 70. When the collar 26 is in the second angular position, as shown in Figures 6 and 9, the ratchet 42 remains in the deformed condition and abuts against the bracket 10, thereby ensuring that this latter is axially clamped in the space provided between the shoulder 40 of the first element 30 and the transverse wall 56 of the collar 26.

The anchoring device 12 further comprises a first rigid sleeve 74 and a second rigid sleeve 76 inserted into each other and fixed to each other, wherein the first rigid sleeve 74 has a cylindrical through hole 78 adapted to slidable receive the core (not shown) of the control cable and the second rigid sleeve 76 has a cylindrical through hole 80 into which an end portion of the sheath (also not shown) of the control cable is inserted and fixed. Preferably, the anchoring device 12 further comprises a first bush 82 radially interposed between the first rigid sleeve 74 and the first element 30 of the body 24 and a second bush 84 radially interposed between the second rigid sleeve 76 and the second element 32 of the body 24, the two bushes 82 and 84 having a vibration-damping function and being therefore made for instance of elastomeric material or of any other material suitable for this function. According to a preferred embodiment, the collar 26 forms on its outer cylindrical surface a radial projection 86 having the function of indicating clearly and unambiguously to the operator whether the collar is in the first or in the second angular position. The radial projection 86 is in fact drivingly connected for rotation with the collar and will therefore also take first and second angular positions corresponding to the first and second angular positions of the collar, respectively, as clearly shown in Figures 4 and 5. The operator can thus immediately realize whether the anchoring device is not correctly mounted on the respective mounting bracket. According to this embodiment, the body 24 of the anchoring device 12 is further advantageously provided with rotation preventing means for preventing the body from rotating relative to the sheath. Said rotation preventing means may be formed for instance by radial slits or projections provided on an inner cylindrical surface of one of the two elements 30 and 32 of the body 24 to engage, in the assembled condition of the anchoring device, with corresponding radial projections or slits, respectively, provided on one of the components of the anchoring device fixed to the sheath, such as for instance the first rigid sleeve 74 or the second rigid sleeve 76.

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Quick-fit anchoring device (12) for anchoring a sheath of a control cable to a mounting bracket (10) having a slot (14) shaped generally as a U opening to a side (16) of the mounting bracket (12), wherein the slot (14) comprises a receiving portion (18) of circular shape which is closed along an arc of circumference extending more than 180 degrees and less than 360 degrees so as to define an opening (20) the width of which is smaller than the diameter of the receiving portion (18),
the device comprising a hollow body (24) adapted to be fixed to the sheath of the control cable coaxially therewith, a collar (26) mounted on the body (24) coaxially therewith and rotatably relative to the same about an axis of rotation (X) coinciding with its own axis, and resilient means (28) interposed between the body (24) and the collar (26),
wherein said resilient means (28) are arranged to apply on the collar (26) a torque tending to cause this latter to rotate about said axis of rotation (X), and
wherein the anchoring device (12) is further provided with locking means (42, 70) arranged to keep the collar (26) locked in a given first angular position, when the anchoring device (12) is not mounted on the mounting bracket (10), and to unlock the collar (26), when the anchoring device (12) is inserted into the slot (14) of the mounting bracket (10), so as to cause the collar (26) to rotate automatically from said first angular position to a second angular position as a result of the torque applied by said resilient means (28), **characterized in that** the collar (26) forms at least one pair of axial projections (60) shaped so as to be insertable into the slot (14) of the mounting bracket (10) by translation along a direction of insertion (Z) laying in the plane of the mounting bracket (10), when the collar (26) is in said first angular position, and to be locked in the slot (14) of the mounting bracket (10) along said direction of insertion (Z), when the collar (26) is in said second angular position.

2. Device according to claim 1, wherein said locking means (42, 70) comprise resiliently deformable means (42).

3. Device according to claim 2, wherein said resiliently deformable means (42) comprise a resiliently deformable ratchet formed by the body (24) and a locking seat (70) provided in the collar (26), the ratchet (42) being configured to engage in the locking seat (70), in the condition where the anchoring device (12) is ready to be mounted on the mounting bracket (10), thereby keeping the collar (26) locked in the first angular position, and to disengage from the locking seat (70), when the anchoring device (12) is inserted into the slot (14) of the mounting bracket (10), thereby allowing the collar (26) to rotate from the first to the second angular position as a result of the torque applied by said resilient means (28).

4. Device according to claim 3, wherein the ratchet (42) is shaped so as to come into contact with an edge (72) of the receiving portion (18) of the slot (14) of the mounting bracket (10), when the anchoring device (12) is inserted into the slot (14), and to be resiliently deformed as a result of the interaction with that edge (72) up to disengagement from the locking seat (70).

5. Device according to any of the preceding claims, wherein said at least one pair of axial projections (60) comprises a pair of projections of crescent-like shape, which are symmetrically arranged on opposite sides of a plane passing through the axis (X) of the collar (26) and have an outer diameter substantially equal to the diameter of the receiving portion (18) of the slot (14) of the mounting bracket (10), said axial projections (60) having an angular size such that when the collar (26) is in the first angular position the overall size thereof in a direction (Y) perpendicular to the direction of insertion (Z) is smaller than the width of the opening (20) of the receiving portion (18), thereby allowing the device (12) to be inserted into or drawn out of the slot (14), whereas when the collar (26) is in the second angular position the overall size thereof in the aforesaid direction (Y) is larger than the width of the opening (20) of the receiving portion (18) of the slot (14), thereby preventing the anchoring device (12) from being drawn out of the slot (14).

6. Device according to any of the preceding claims, wherein the first and second angular positions of the collar (26) are rotated 90 degrees to each other.

7. Device according to any of the preceding claims, wherein the body (24) comprises a first hollow element (30) and a second hollow element (32) connected to each other, wherein the first hollow element (30) comprises a cylindrical tubular portion (38) and a shoulder (40) which extends radially outwards from the cylindrical tubular portion (38), wherein the collar (26) is mounted on the cylindrical tubular portion (38) between the shoulder (40) and the second hollow element (32) so as to define with the shoulder (40) a seat for insertion of the mounting bracket (10), and wherein said resilient means (28) are interposed between the collar (26) and the second hollow element (32).

8. Device according to claim 7 and according to any of claims 2 to 4, wherein said resiliently deformable means (42) are formed by the shoulder (40) of the first element (30) of the body (24).

9. Device according to any of the preceding claims, wherein the collar (26) forms on its outer cylindrical surface a radial projection (86) for indicating whether the collar (26) is in the first or in the second angular position.

10. Device according to any of the preceding claims, wherein the body (24) is provided with anti-rotation means for preventing the body (24) from rotating relative to the sheath of the control cable.
